# EUROPEAN PATENT APPLICATION

(11) **EP 0 720 818 A1**
(43) Date of publication of application: **10.07.1996**
(21) Application number: 95924511.9
(22) Date of filing: 06.07.1995
(51) Int. Cl.: A23F 5/14

(54) **CORRIGENT FOR COFFEE**

(30) Priority: 07.07.1994 JP 188729/94
(71) Applicant: TAKAHASHI, Shiyushichi, Funabashi-shi, Chiba-ken 274 (JP)
(72) Inventor: TAKAHASHI, Shiyushichi, Funabashi-shi, Chiba-ken 274 (JP)
(74) Representative: Abitz, Walter, Dr.-Ing.
(86) International application number: JP9501348
(87) International publication number: WO9601568

(57) **Abstract**

An addition to coffee of Tochu and/or Ginseng will serve at the taste improver by reducing the bitterness and the smoky smell of coffee.

This taste improver, moreover, will enhance the coffee mellowness to bring about a rich, tasteful beverage.

Although Tochu alone may sufficiently kill the bitterness and the smoky smell of coffee, the combination with Ginseng will enhance the mallowness and taste, people, in general, drink coffee with milk and/or sugar, but they will no longer need these materials by the use of the above mentioned taste improver.

Furthermore, this wonder will enhance the coffee taste improver.

Furthermore, this wonder will enhance the coffee taste without spoiling its original quality or characteristics.

## Description

### [Scope of Requirements]

[Requirement 1.] It should be the taste improver whose materials for blending with coffee are characterized as Tochu and/or Ginseng.
[Requirement 2.] It should be the taste improver as defined in REQUIREMENT Item 1, whose materials for blending with coffee are characterized as the above mentioned Tochu and Ginseng used fresh or dried or roasted and brewed.
[Requirement 3.] It should be the taste improver in the form of powder as defined in REQUIREMENT Item 2, whose materials for blending with coffee are characterized as the above mentioned Tochu and/or Ginseng used fresh or dried or roasted and brewed.
[Requirement 4.] It should be the taste improver in the form of extracted liquid or extracted essence as defined in REQUIREMENT Item 3, whose materials for blending with coffee are characterized as the above mentioned Tochu and/or Ginseng used boiled. Traditional coffee manufacturing technology and some related problems.

### [Detail Explanation of this Invention]

### [0001]

### [For industrial utilities]

This invention will serve as the taste improver for coffee by enhancing its taste and characteristics.

### [0002]

### [Existing Technology and Problem]

Coffee beans traditionally have been roasted and brewed into a beverage. During this manufacturing process, however, coffee has lost its original mellowness in place of acquiring bitterness and smoky smell, expecting a few people who praise bitterness and smoky smell in coffee. Most drinkers will add some milk and sugar to kill these acquisitions to make the beverage more acceptable and more tasty.

Besides the bitterness and smoky smell, a large content of caffeine is another problem - an irritant to the gastric mucosac. Caffeine is known to be effective as a cure for drowsiness, but when taken in the evening or at night, it will disturb sleep because of its arousal effect which may afflict many coffee lovers.

### [0003]

### [The solution to these problems]

The addition of Tochu or Ginseng will neutralize the bitterness and smoky smell in coffee without spoiling the original coffee taste and aroma due to the taste improving ingredients contained in Tochu or Ginseng. Shushichi Takahashi and his research team have already testified that Tochu or Ginseng will accelerants also naturally protect the walls of stomach against caffeine infliction. The strong diuretic action of Tochu will cause the ingredients of bitterness and smoky smell as well as caffeine to rapidly evacuate into urine, then ventilating the blood. Calcium-rich Tochu will inhabit the caffenic excitability.

### [0004]

The Tochu used in this invention are obtained first from fresh leaves of Tochu (Eucommia ulmoides olive) and by finely cutting them or drying them after that, or through a specified prescription e.g., by roasting and brewing them for 0.5 to 2 hours under temperatures from 80 to 120° C. If necessary, they may be prepared in mesh properly to one's request.

The extract from Tochu used in this invention is thus defined when it is presented in the form of liquid just filtrated or, if necessary, in the form of an aqueous solution concentrated or dried, or powdered, after filtrating the extracted liquid obtained through a specified method e.g., by extracting fresh or dried leaves via water or an aqueous organic solvent under room temperature or temperatures from 80 to 100° C.

### [0005]

The Ginseng used this invention is obtained first from fresh roots of Ginseng (C.A mayer) and finely cutting them or drying them after that, or in accordance with a specified method e.g., by roasting and brewing them for 0.5 to 2 hours under temperatures from 100 to 150° C. If necessary, they may be prepared in mesh properly to one's request.

The extract from Ginseng in this invention is thus defined when it is presented in the form of liquid just filtrated or, if necessary, in the form of an aqueous solution concentrated or dried, or powdered, after filtrating the extracted liquid obtained through a specified method e.g., by extracting fresh or dried roots via water or an aqueous organic solvent under room temperature or temperatures from 100 to 150° C.

### [0006]

The recommendable weight ratio between coffee beams and the added taste improver is considered to be within the range of 2.0 : 1.0 (2 part weight for coffee beans vs. 1 part weight for Tochu or 1 part weight for Tochu and Ginseng mixture).

In case the ratio of the added taste improver is too high, it will ruin the coffee characteristics, and in case too low, it will reduce the improver's effectiveness.

Although Tochu alone may sufficiently achieve the desired purposes, the blend with Ginseng with the combination in which the weight ratio between these two substances ranges from 2.0 : 1.0 (2 part weight for Tochu vs. 1 part weight for Ginseng) to 2.0 : 0.02 (2 part weight for Tochu vs. 0.02 part weight for Ginseng) is appropriate. If possible, the combination of 2.0 : 0.7 weight ratio (2 part weight for Tochu vs. 0.7 part weight for Ginseng) is more recommendable.

### [0007]

In case the ratio of Ginseng to Tochu is too high, it will ruin the coffee characteristics, and in case too low, it will reduce the mellowness of Ginseng.

### [0008]

### Case 1:

We obtained some beverages with the mixture of the taste improver and coffee in the form of an extracted liquid and aqueous solutions (concentrated or dried) and powder through a specified method via water or an aqueous organic solvent under temperatures from 80 to 100° C, using the improver and coffee beans with the combination of 0.7 : 2.0 weight ratio (i.e., 0.7 part for Tochu and/or the blend of Tochu and Ginseng vs. 2 part for coffee beans).

### [0009]

### Case 2:

We classified the testing materials into two groups; one, the beverages obtained in Case 1 (the experimental group) and the other, coffee proper (the project group). We prepared these two groups of samples (materials) by extracting with the concentration of 2 g/190 ml of water.

We used them as the two groups of samples (namely, the experimental group and the object group) for sensory analysis. Trained twenty four subjects between 18 and 25 years old are paneled in the experiments.

Evaluation items are;
1) Do you recognize a reduction of bitterness?
2) Do you recognize a reduction of smoky smell?
3) Do you recognize mellowness?
4) Do you recognize good taste?

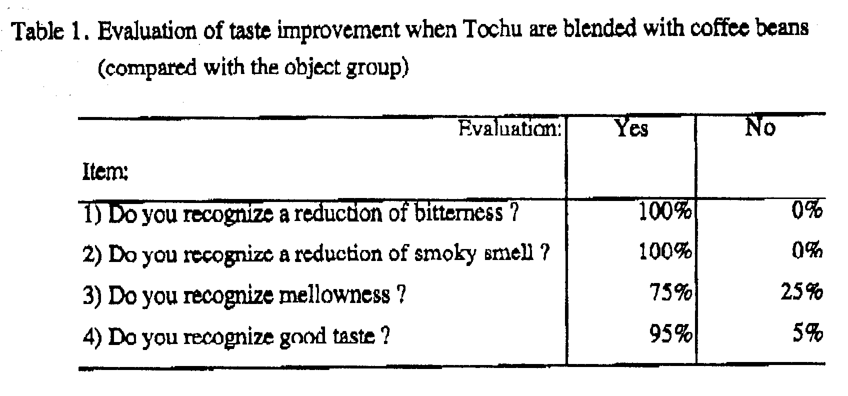

### [0009]

As results for item 1 to 4 in Case 1 shown in Table 1 above., when Tochu alone is used as the taste improver, the experimental group gained 100% evaluation compared with the object group in both item 1 and 2, followed by 95% in item 4 and 75% in item 3.

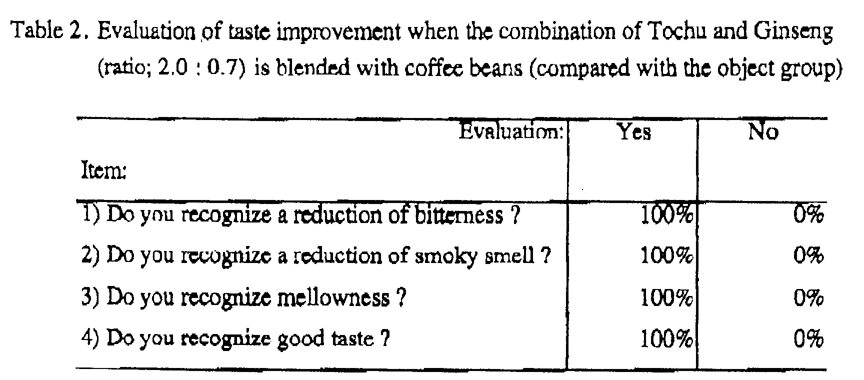

### [0010]

Next, we made experiments using extraction mixtures of coffee beans and the blend of Tochu and Ginseng with the combination ratio of 2.0 : 0.7 as prescribed in Case 1. Evaluation items are also the same as Case 1.

As shown in Table 2, the experiment group gained 100% evaluation compared with the object group in all the items. The fact that the blended materials gained evaluation 25% or 5% higher in item 3 or item 4 than their counterparts in Table 1 using Tochu alone testifies that the blend of Tochu and Ginseng has elevated mellowness (item 3) and good taste (item 4).

### [0011]

### The general effect of this invention

This invention has brought about the fact that when Tochu and/or Ginseng are blended with coffee beans as the taste improver, they will reduce the bitterness and the smoky smell of coffee quite markedly, moreover, they will enhance the mellowness and present a tasteful coffee with a rich aroma.

## Claims

1. It should be the taste improver whose materials for blending with coffee are characterized as Tochu and/or Ginseng.

2. It should be the taste improver as defined in REQUIREMENT Item 1, whose materials for blending with coffee are characterized as the above mentioned Tochu and Ginseng used fresh or dried or roasted and brewed.

3. It should be the taste improver in the form of powder as defined in REQUIREMENT Item 2, whose materials for blending with coffee are characterized as the above mentioned Tochu and/or Ginseng used fresh or dried or roasted and brewed.

4. It should be the taste improver in the form of extracted liquid or extracted essence as defined in REQUIREMENT Item 3, whose materials for blending with coffee are characterized as the above mentioned Tochu and/or Ginseng used boiled. Traditional coffee manufacturing technology and some related problems.
